# EUROPÄISCHE PATENTANMELDUNG

(11) **EP 4 745 417 A1**
(43) Veröffentlichungstag der Anmeldung: **20.05.2026**
(21) Anmeldenummer: 25215291.3
(22) Anmeldetag: 12.11.2025
(51) Int. Cl.: F16B 25/00, F16B 33/00, F16B 33/06

(54) **SCHRAUBE, VERFAHREN UND ANORDNUNG**

(30) Priorität: 19.11.2024 DE 102024133953
(71) Anmelder: Adolf Würth GmbH & Co. KG, 74653 Künzelsau (DE)
(72) Erfinder: ZIMPRICH, Sebastian, 76185 Karlsruhe (DE); BARZ, Arne, 74532 Ilshofen (DE); KLEINHANS, Lukas, 76131 Karlsruhe (DE); SÄNGER, Johannes, 76131 Karlsruhe (DE); KELLERMANN, Fabienne, 74564 Crailsheim (DE); LINDENMANN, Andreas, 76131 Karlsruhe (DE); MATTHIESEN, Prof. Sven, 76139 Karlsruhe (DE)
(74) Vertreter: Patentanwälte Ruff, Wilhelm, Beier, Dauster & Partner mbB

(57) **Zusammenfassung**

Die Erfindung betrifft eine Schraube (10) zum Eindrehen in Holz oder holzähnliche Werkstoffe mit einem Schraubenschaft (12), wobei der Schraubenschaft eine sich verjüngende Spitze (14) aufweist und wenigstens abschnittsweise mit einem Gewinde (16) versehen ist, und mit einem Schraubenkopf (18), wobei der Schraubenkopf mit einer Antriebsausbildung versehen ist, bei der wenigstens der Schraubenschaft wenigstens abschnittsweise mit einer ersten, unteren Gleitbeschichtung (20 )und einer zweiten, oberen Gleitbeschichtung (22) versehen ist, wobei jede der Gleitbeschichtungen eine Reibung beim Eindrehen der Schraube zwischen der Schraube und dem Werkstück gegenüber dem Eindrehen einer Referenzschraube, bei der das Grundmaterial des Schraubenschafts nicht beschichtet ist, verringert.

## Beschreibung

Die Erfindung betrifft eine Schraube zum Eindrehen in Holz oder holzähnliche Werkstoffe mit einem Schraubenschaft, wobei der Schraubenschaft eine sich verjüngende Spitze aufweist und wenigstens abschnittsweise mit einem Gewinde versehen ist, und mit einem Schraubenkopf, wobei der Schraubenkopf mit einer Antriebsausbildung versehen ist. Die Erfindung betrifft auch ein Verfahren zum Beschichten einer Schraube und eine Anordnung mit einer erfindungsgemäßen Schraube und einem Werkstück aus Holz oder holzähnlichem Werkstoff.

Aus der deutschen Offenlegungsschrift DE 27 33 802 A1 ist eine Schraube zum Eindrehen in Holz oder holzähnliche Werkstoffe mit einem Schraubenschaft, wobei der Schraubenschaft eine sich verjüngende Spitze aufweist und wenigstens abschnittsweise mit einem Gewinde versehen ist, und mit einem Schraubenkopf bekannt, wobei der Schraubenkopf mit einer Antriebsausbildung versehen ist. Ein Basismaterial der Schraube ist verzinkt, um einen Korrosionsschutz zu gewährleisten. Darüber hinaus ist mindestens der Gewindeschaft der Schraube mit einem Antihaftmaterial, beispielsweise unter der Marke "Teflon" bekannter Fluorkunststoff, beschichtet. Durch Beschichtung mit Antihaftmaterial kann das Eindrehmoment der Schraube verringert werden.

Mit der Erfindung sollen eine Schraube, ein Verfahren zum Beschichten einer Schraube und eine Anordnung mit einer Schraube und einem Werkstück verbessert werden.

Erfindungsgemäß ist hierzu eine Schraube mit den Merkmalen von Anspruch 1, ein Verfahren zum Beschichten einer Schraube mit den Merkmalen von Anspruch 8 bzw. eine Anordnung mit den Merkmalen von Anspruch 11 vorgesehen. Vorteilhafte Weiterbildungen der Erfindung sind in den jeweiligen Unteransprüchen angegeben.

Eine Schraube zum Eindrehen in Holz oder holzähnliche Werkstoffe weist einen Schraubenschaft auf, wobei der Schraubenschaft eine sich verjüngende Spitze aufweist und wenigstens abschnittsweise mit einem Gewinde versehen ist. Die Schraube weist weiter einen Schraubenkopf auf, wobei der Schraubenkopf mit einer Antriebsausbildung versehen ist. Die Antriebsausbildung kann beispielsweise als Kreuzschlitz oder Innenvielrund oder dergleichen ausgebildet sein. Wenigstens der Schraubenschaft ist wenigstens abschnittsweise mit einer ersten, unteren Gleitbeschichtung und einer zweiten, oberen Gleitbeschichtung versehen, wobei das Material jeder der Gleitbeschichtungen eine Reibung beim Eindrehen der Schraube zwischen der Schraube und dem Werkstück gegenüber dem Eindrehen einer Referenzschraube, bei der das Grundmaterial des Schraubenschafts nicht beschichtet ist, verringert.

Überraschenderweise weist eine Schraube, die wenigstens abschnittsweise mit einer ersten, unteren Gleitbeschichtung und einer zweiten, oberen Gleitbeschichtung versehen ist, gegenüber bekannten Schrauben erhebliche Vorteile auf. Die erste, untere Gleitbeschichtung und die zweite, obere Gleitbeschichtung können aus unterschiedlichen Materialen bestehen und unterschiedliche Eigenschaften aufweisen. Beispielsweise weist die erste Gleitbeschichtung einen geringeren Reibwert auf und die zweite Gleitbeschichtung weist eine höhere Temperaturbeständigkeit auf. Beispielsweise kann auch eine der Gleitbeschichtungen in besonderer Weise temperaturbeständig sein und die andere Gleitbeschichtung besteht aus umweltverträglich herstellbaren Materialien. Die Kombination von zwei unterschiedlichen Gleitbeschichtungen auf ein- und derselben Schraube kann beispielsweise dazu genutzt werden, im Bereich der beim Eindrehen der Schraube in ein Werkstück hochbelasteten Spitze eine erste, untere Gleitbeschichtung und eine zweite, obere Gleitbeschichtung aufzutragen, wohingegen in einem Bereich, der sich an den Bereich der Spitze anschließt, lediglich eine einzige Gleitbeschichtung aufgetragen wird. Beispielsweise erstreckt sich ein an die Spitze anschließender Bereich über eine Länge von maximal 20 mm. Dieser Bereich dringt beim Eindrehen der Schraube in Holz oder Holzwerkstoff anschließend an die Spitze in das Werkstück ein und mit der Spitze und mit diesem sich an die Spitze anschließenden Bereich muss die Hauptarbeit beim Formen eines Gewindes in einem vorgebohrten oder auch nicht vorgebohrten Werkstück geleistet werden. Wenn also im Bereich der Spitze und in dem sich an die Spitze anschließenden Bereich zwei Gleitbeschichtungen übereinander aufgetragen sind, so kann dadurch sichergestellt werden, dass bis zum vollständigen Eindrehen der Schraube wenigstens noch eine untere Gleitbeschichtung im Bereich der Spitze und in dem sich an die Spitze anschließenden Bereich vorhanden ist. Beispielsweise kann die Spitze und der sich an die Spitze anschließende Bereich mit einer ersten, unteren Gleitbeschichtung versehen sein, die äußerst temperaturbeständig ist. Um das anfängliche Eindrehen der Schraube zu erleichtern, werden die Spitze und der sich an die Spitze anschließende Bereich zusätzlich noch mit einer zweiten, oberen Gleitbeschichtung mit sehr geringem Reibbeiwert beschichtet. Das anfängliche Eindrehen der Schraube in das Werkstück kann dadurch mit geringerem Eindrehmoment erfolgen und dennoch kann die Schraube vollständig in das Werkstück eingeschraubt werden und die erste, untere Gleitbeschichtung sorgt dann immer noch für ein geringes Eindrehmoment, auch wenn möglicherweise die zweite, obere Gleitbeschichtung im Bereich der Spitze und in dem sich an die Spitze anschließenden Bereich bereits abgetragen ist. Beispielsweise kann auch lediglich an der Spitze und in dem an die Spitze anschließenden Bereich als erste, untere Gleitbeschichtung oder auch als obere, zweite Gleitbeschichtung eine sehr temperaturbeständige Beschichtung aufgetragen werden, beispielsweise aus PTFE, genannt Teflon. In dem weniger belasteten übrigen Bereich des Schraubenschafts kann hingegen ausschließlich eine umweltfreundliche Gleitbeschichtung aufgetragen werden, die den Belastungen an der Spitze und in dem sich an die Spitze anschließenden Bereich beim Eindrehen der Schraube nicht gewachsen wäre. Lediglich im Bereich der Spitze und in dem sich an die Spitze anschließenden Bereich liegen dann zwei Gleitbeschichtungen übereinander vor. Mit der erfindungsgemäßen Schraube lassen sich somit Eigenschaften unterschiedlicher Materialien für Gleitbeschichtungen in äußerst vorteilhafter Weise kombinieren.

In Weiterbildung der Erfindung ist die erste, untere Gleitbeschichtung oder die zweite, obere Gleitbeschichtung ausschließlich im Bereich der Spitze sowie maximal über 20 mm anschließend an die Spitze aufgetragen.

Im Rahmen der Erfindung spielt es keine wesentliche Rolle, ob die erste, untere Gleitbeschichtung oder die zweite, obere Gleitbeschichtung ausschließlich im Bereich der Spitze sowie anschließend an die Spitze aufgetragen ist. Wesentlich ist, dass im Bereich der beim Eindrehen der Schraube hochbelasteten Spitze und im ebenfalls hochbelasteten Bereich anschließend an die Spitze zwei Gleitbeschichtungen aufgetragen sind, die beispielsweise unterschiedliche Eigenschaften bezüglich ihres Reibbeiwerts und der Temperaturbeständigkeit haben.

In Weiterbildung der Erfindung ist die erste, untere Gleitbeschichtung oder die zweite, obere Gleitbeschichtung ausschließlich im Bereich der Spitze sowie maximal über 20 mm anschließend an die Spitze und im Bereich eines Schaftfräsers und/oder eines Schaftverdichters am Schraubenschaft aufgetragen.

Neben der Spitze und dem unmittelbar an die Spitze anschließenden Bereich sind auch in radialer Richtung vorstehende Abschnitte des Schraubenschafts hochbelastet, beispielsweise am Schaft vorgesehene Schaftfräser und/oder Schaftverdichter. Wenn in diesen, hochbelasteten Bereichen zwei Gleitbeschichtungen übereinander vorgesehen sind, werden die Eigenschaften der Schraube beim Eindrehen in ein Werkstück wesentlich verbessert.

Gemäß der Erfindung ist das Grundmaterial des Schraubenschafts mit einer Korrosionsschutzschicht versehen und die beiden Gleitbeschichtungen sind auf die Korrosionsschutzschicht aufgetragen.

Sowohl die erste, untere Gleitbeschichtung als auch die zweite, obere Gleitbeschichtung sind hinsichtlich ihrer Gleiteigenschaften und damit hinsichtlich der Reduzierung des Reibbeiwerts der Schraube beim Eindrehen in ein Werkstück optimiert. Die beiden Gleitbeschichtungen tragen jedoch nicht oder lediglich unwesentlich zum Korrosionsschutz der Schraube bei. Die beiden Gleitbeschichtungen sind aber auf eine Korrosionsschutzschicht, beispielsweise eine Zink-Nickel-Beschichtung der Schraube, aufgetragen.

**In** Weiterbildung der Erfindung weist die erste und/oder die zweite Gleitbeschichtung eine Dispersion von hochmolekularen Polymeren in einer Flüssigkeit, insbesondere Wasser, auf.

Beispielsweise kann als Gleitbeschichtung Gleitmo 615 verwendet werden.

In Weiterbildung der Erfindung weist die erste, untere Gleitbeschichtung und/oder die zweite, obere Gleitbeschichtung ein Kunststoffmaterial, insbesondere PTFE (Teflon), auf.

PTFE (Polytetrafluorethylen, Markenname Teflon) ist äußerst temperaturstabil und kann gleichzeitig den Reibbeiwert einer Schraube beim Eindrehen in ein Werkstück wesentlich verringern.

In Weiterbildung der Erfindung weist die erste, untere Gleitbeschichtung Zinklamellen auf.

Mit einer Beschichtung mit Zinklamellen lässt sich sowohl ein reduzierter Reibbeiwert als auch ein Korrosionsschutz erzielen.

In Weiterbildung der Erfindung ist ein Basismaterial des Schraubenschafts mit einer Korrosionsschutzschicht, insbesondere einer Zink-Nickel-Schicht, versehen.

Bei einem erfindungsgemäßen Verfahren zum Beschichten einer Schraube ist das Auftragen einer ersten, unteren Gleitbeschichtung und einer zweiten, oberen Gleitbeschichtung wenigstens auf den Schraubenschaft vorgesehen.

Neben dem Schraubenschaft kann die erste, untere Gleitbeschichtung und/oder die zweite, obere Gleitbeschichtung auch auf die vollständige Schraube aufgetragen werden, wenn dies die Herstellung erleichtert, beispielsweise aber auch lediglich auf den Schraubenschaft und auf die Unterseite des Schraubenkopfs, insbesondere dann, wenn es sich um eine Senkkopfschraube handelt.

**In** Weiterbildung der Erfindung wird die erste, untere Gleitbeschichtung oder die zweite, obere Gleitbeschichtung ausschließlich im Bereich der Spitze des Schraubenschafts und in einem sich an die Spitze anschließenden Bereich des Schraubenschafts aufgetragen, wobei der sich an die Spitze anschließende Bereich maximal 20 mm lang ist.

Gemäß der Erfindung erfolgt das Aufbringen einer Korrosionsschutzschicht auf den gesamten Schraubenschaft vor dem Aufbringen der beiden Gleitbeschichtungen.

Zweckmäßigerweise wird die Korrosionsschutzschicht auf die gesamte Schraube vor dem Aufbringen der beiden Gleitbeschichtungen aufgetragen.

In Weiterbildung der Erfindung erfolgt das Aufbringen von Zinklamellen, das Aufbringen einer Dispersion von hochmolekularen Polymeren in einer Flüssigkeit, insbesondere Wasser, oder das Aufbringen eines Kunststoffmaterials, insbesondere PTFE, als erste, untere Gleitbeschichtung.

Als zweite, obere Gleitbeschichtung wird vorteilhafterweise eine Dispersion von hochmolekularen Polymeren in einer Flüssigkeit, insbesondere Wasser, beispielsweise Gleitmo 615, aufgetragen oder ein Kunststoffmaterial, insbesondere PTFE.

Bei einer Anordnung mit einer erfindungsgemäßen Schraube und einem Werkstück aus Holz oder holzähnlichem Werkstoff ist die Schraube wenigstens abschnittsweise in das Werkstück eingeschraubt und die zweite, obere Gleitbeschichtung ist wenigstens an der Spitze des Schraubenschafts abgetragen und die erste, untere Gleitbeschichtung ist wenigstens an der Spitze noch wenigstens teilweise vorhanden.

Auf diese Weise kann während des vollständigen Einschraubvorgangs der Schraube in ein Werkstück ein gegenüber einer unbeschichteten Schraube reduzierter Reibbeiwert sichergestellt werden. Dies auch dann, wenn aufgrund der hohen Temperaturbelastung beim Einschrauben an der Spitze die zweite, obere Gleitbeschichtung an der Spitze des Schraubenschafts bereits abgetragen ist. Beispielsweise kann die zweite, obere Gleitbeschichtung einen sehr niedrigen Reibbeiwert aufweisen, um das anfängliche Eindrehen der Schraube in das Werkstück zu erleichtern. Ist die Schraube dann schon abschnittsweise eingedreht und die zweite, obere Gleitbeschichtung im Bereich der Spitze bereits abgetragen, sorgt die erste, untere Gleitbeschichtung beim weiteren Eindrehen weiterhin für einen reduzierten Reibbeiwert und ein niedrigeres Einschraubmoment gegenüber einer unbeschichteten Schraube.

In Weiterbildung der Erfindung ist die zweite, obere Gleitbeschichtung in einem an die Spitze anschließenden Bereich abgetragen, wobei der sich an die Spitze anschließende Bereich maximal 20 mm lang ist, und die untere Gleitbeschichtung ist in dem an die Spitze anschließenden Bereich noch wenigstens teilweise vorhanden.

Weitere Merkmale und Vorteile der Erfindung ergeben sich aus den Unteransprüchen und der folgenden Beschreibung bevorzugter Ausführungsformen der Erfindung im Zusammenhang mit den Zeichnungen. In den Zeichnungen zeigen:
- Fig. 1: eine schematische Seitenansicht einer Schraube gemäß einer ersten Ausführungsform der Erfindung,
- Fig. 2: eine schematische Schnittansicht der Schraube der Fig. 1,
- Fig. 3: eine schematische Schnittansicht einer Schraube gemäß einer zweiten Ausführungsform der Erfindung,
- Fig. 4: eine schematische Seitenansicht einer erfindungsgemäßen Schraube gemäß einer dritten Ausführungsform der Erfindung,
- Fig. 5: eine schematische Schnittansicht der Schraube der Fig. 4,
- Fig. 6: eine schematische Schnittansicht einer Schraube gemäß einer vierten Ausführungsform der Erfindung,
- Fig. 7: eine schematische Seitenansicht einer Schraube gemäß einer fünften Ausführungsform der Erfindung,
- Fig. 8: eine schematische Seitenansicht einer Schraube gemäß einer sechsten Ausführungsform der Erfindung,
- Fig. 9: eine schematische Schnittansicht der Schraube der Fig. 8 und
- Fig. 10: eine schematische Schnittansicht einer Schraube gemäß einer siebten Ausführungsform der Erfindung.

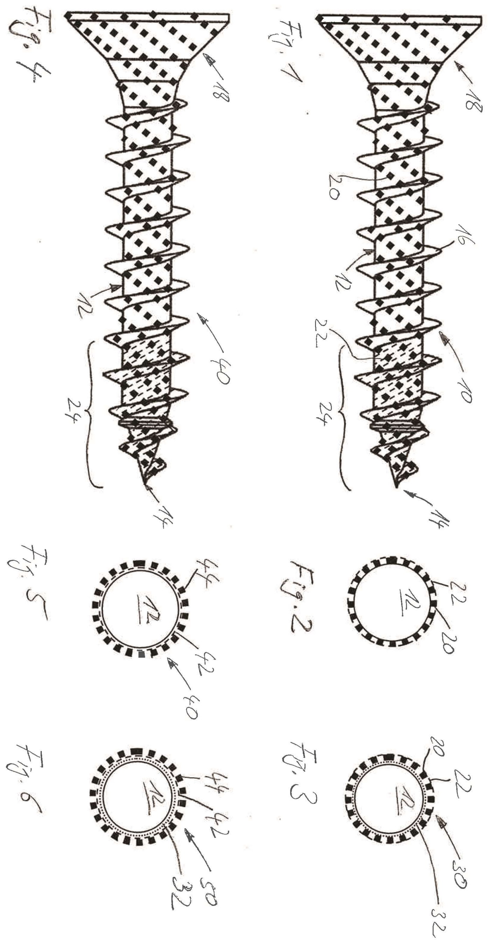

Fig. 1 zeigt eine schematische Seitenansicht einer Schraube 10, die einen Schraubenschaft 12 mit einer Spitze 14 und einem sich von der Spitze 14 entlang dem Schraubenschaft 12 erstreckenden Gewinde 16 aufweist. Die Schraube 10 ist zum Eindrehen in Holz oder holzähnliche Werkstoffe vorgesehen, wobei die Schraube 10 sich ein Gewinde in Holz oder holzähnlichem Werkstoff selbst formt. Das Gewinde 16 erstreckt sich infolgedessen bis zu der Spitze 14. Die Schraube 10 kann ohne Vorbohren in ein Werkstück eingeschraubt werden oder in eine vorhandene Bohrung eines Werkstücks eingeschraubt werden. Ausgehend von der Spitze 14 nimmt eine Flankenhöhe des Gewindes in einem sich kegelstumpfartig erweiternden Abschnitt zu. In dem sich kegelstumpfartig erweiternden Abschnitt ist ein Verdichterring vorgesehen, der im Rahmen der Erfindung auch entfallen kann. Im Übrigen können die Spitze und der sich an die Spitze anschließende Bereich im Rahmen der Erfindung auch anders gestaltet sein, beispielsweise mit einer Bohrspitze oder auch mit Fräsrippen. Im Anschluss an den sich kegelstumpfförmig erweiternden Abschnitt weist der Schraubenschaft 12 im weiteren Verlauf eine zylindrische Form auf, in der die Flankenhöhe des Gewindes 16 im Wesentlichen konstant bleibt. An den zylindrischen Abschnitt des Schraubenschafts 12 schließt sich ein Schraubenkopf 18 an, der sich ausgehend von dem zylindrischen Abschnitt des Schraubenschafts 12 kegelstumpfartig in mehreren Abschnitten mit unterschiedlichem Kegelwinkel erweitert. Dies deshalb, da die Schraube 10 als Senkschraube ausgebildet ist und die Unterseite des Schraubenkopfs 18 in das Holz oder den holzähnlichen Werkstoff eindringt, bis die in Fig. 1 links zu erkennende Oberseite des Schraubenkopfs 18 im Wesentlichen bündig ist mit einer Oberfläche des Werkstücks aus Holz oder holzähnlichem Werkstoff. Ausgehend von der Oberseite des Schraubenkopfs 18 ist eine in Fig. 1 nicht erkennbare Antriebsausbildung vorgesehen, die sich in den Schraubenkopf 18 hineinerstreckt. Eine solche Antriebsausbildung kann beispielsweise als Kreuzschlitzantrieb oder auch als Innenrund-Antrieb ausgebildet sein. Im Rahmen der Erfindung kann die Ausbildung der Schraube 10 bezüglich des Schraubenschafts 12 und des Schraubenkopfs 18 von der in Fig. 1 gezeigten Schraube 10 abweichen. Beispielsweise muss die Schraubenspitze 14 nicht notwendigerweise punktförmig ausgebildet sein, sondern kann beispielsweise auch leicht abgerundet ausgebildet sein und der Schraubenkopf 18 muss nicht als Senkkopf ausgebildet sein, sondern kann in anderer Weise ausgebildet sein.

Wesentlich für die Erfindung ist, dass wenigstens der Schraubenschaft 12 der Schraube mit einer ersten, unteren Gleitbeschichtung 20, siehe auch die Schnittansicht der Schraube 10 in Fig. 2, sowie einer zweiten, oberen Gleitbeschichtung 22 versehen ist. In der Darstellung der Fig. 1 ist die erste, untere Gleitbeschichtung 20 über die gesamte Länge und den gesamten Umfang des Schraubenschafts 12 und auch auf die Unterseite des Schraubenkopfs 18 aufgetragen und ist durch Punkte in Form von schwarzen Quadraten symbolisiert.

Die zweite, obere Gleitbeschichtung 22 ist lediglich in einem Bereich 24 auf den Schraubenschaft 12 aufgetragen. Der Bereich 24 erstreckt sich ausgehend von der Spitze 14 über eine Länge von maximal 20 mm. Bei der dargestellten Schraube erstreckt sich der Bereich 24 ausgehend von der punktförmigen Spitze 14 über den sich an die Spitze 14 anschließenden kegelstumpfförmig erweiternden Bereich und dann noch über etwa zwei Gewindegänge in den zylindrischen Abschnitt des Schraubenschafts 12 hinein. In diesem Bereich 24, der sich an die Schraubenspitze 14 anschließt, ist die zweite, obere Gleitbeschichtung 22 aufgetragen. In der Darstellung der Fig. 1 ist die zweite, obere Gleitbeschichtung 22 mittels strichlierter Linien symbolisiert.

In der Darstellung der Fig. 2 ist die erste, untere Gleitbeschichtung 20 ebenfalls durch schwarze Quadrate symbolisiert und die zweite, obere Gleitbeschichtung 22 durch eine strichlierte Kreislinie.

In dem Bereich 24 und an der Schraubenspitze 14 ist der Schraubenschaft 12 somit mit zwei übereinander angeordneten Gleitbeschichtungen 20, 22 versehen. Es hat sich herausgestellt, dass die Spitze 14 und der sich an die Spitze 14 anschließende Bereich 24 beim Eindrehen einer Schraube in Holz oder holzähnliche Werkstoffe, insbesondere dann, wenn das Werkstück nicht vorgebohrt ist, bezüglich der Temperaturbelastung und bezüglich einer Belastung durch Abrieb besonders stark belastet ist. Denn die Spitze 14 und der Bereich 24 müssen eine Bohrung im Werkstück schaffen und auch ein Gewinde in die Bohrung einformen. Wenn in diesem besonders belasteten Bereich daher zwei Gleitbeschichtungen 20, 22 übereinander vorgesehen sind, so kann sichergestellt werden, dass während des gesamten Vorgangs des Einschraubens der Schraube 10 in ein Werkstück an der Spitze 14 und in dem Bereich 24 zumindest noch eine Gleitbeschichtung, insbesondere die erste, untere Gleitbeschichtung 20, vorhanden ist.

In dem sich an den Bereich 24 bis zur Unterseite des Schraubenkopfs 18 anschließenden Bereich ist die Belastung durch Temperatur und Abrieb beim Eindrehen der Schraube in ein Werkstück hingegen deutlich geringer. Hier genügt eine einzige Gleitbeschichtung, um während des gesamten Prozesses des Einschraubens der Schraube in ein Werkstück einen niedrigen Reibbeiwert mit dem Material des Werkstücks sicherzustellen.

Mit der erfindungsgemäßen Schraube kann somit eine Schraube dahingehend verbessert werden, dass lediglich in den hoch belasteten Bereichen, Bereichen, nämlich im Bereich der Spitze 14 und in dem sich an die Spitze 14 anschließenden Bereich 24, zwei Gleitbeschichtungen 20, 22 vorhanden sind, von denen mindestens eine den hohen Anforderungen beim Beginn des Einschraubens der Schraube in ein Werkstück genügt, dass hingegen in den weniger stark belasteten Bereichen, nämlich anschließend an das Ende des Bereichs 24 bis zur Unterseite des Schraubenkopfs 18, nur eine Gleitbeschichtung 20 vorgesehen sein kann, die auch nur weniger hohen Anforderungen genügt. Diese Gleitbeschichtung 20 kann dann beispielsweise kostengünstiger ausgeführt werden.

Bei der Ausführungsform der Fig. 1 und 2 ist die zweite, obere Gleitbeschichtung 22 lediglich an der Spitze 14 und in dem sich an die Spitze 14 anschließenden Bereich 24 aufgetragen. Die erste, untere Gleitbeschichtung 20 erstreckt sich hingegen über die gesamte Länge des Schraubenschafts 12 einschließlich der Unterseite des Schraubenkopfs 18. Wie bereits ausgeführt wurde, kann die erste, untere Gleitbeschichtung 20 besonders temperaturstabil sein und beispielsweise aus einer Kunststoffbeschichtung, insbesondere einer Beschichtung aus Polytetrafluorethylen (PTFE), bestehen. Die zweite, obere Gleitbeschichtung 22 an der Spitze 14 und im Bereich 24 kann hingegen hinsichtlich eines besonders geringen Reibwerts optimiert sein und beispielsweise eine Dispersion von hochmolekularen Polymeren in einer Flüssigkeit, insbesondere Wasser, aufweisen. Ein Beispiel für eine solche Gleitbeschichtung 22 ist das Produkt Gleitmo 615. Die zweite, obere Gleitbeschichtung 22 sorgt zu Beginn des Eindrehens der Schraube in ein Werkstück für einen besonders geringen Reibwert zwischen der Spitze 14 bzw. dem Bereich 24 und dem umgebenden Material des Werkstücks. Selbst wenn die zweite, obere Gleitbeschichtung 22 bereits kurz nach Beginn des Einschraubens abgetragen ist, kann die erste, untere Gleitbeschichtung 20, die ja auch noch an der Spitze sowie im Bereich 24 vorhanden ist, auch im weiteren Verlauf des Einschraubens der Schraube 10 in ein Werkstück für einen geringen Reibbeiwert und damit für ein niedrigeres Einschraubmoment verglichen mit einer unbeschichteten Schraube sorgen.

Fig. 3 zeigt eine Schnittansicht einer Schraube 30 gemäß einer weiteren Ausführungsform der Erfindung. Die Schraube 30 ist bezüglich ihres Schraubenschafts 12 gleich ausgebildet wie die Schraube 10 der Fig. 1. Auf das Grundmaterial des Schraubenschafts 12 ist aber zunächst eine Korrosionsschutzschicht 32 aufgetragen, indem die vollständige Schraube 30 beispielsweise verzinkt worden ist. Auf die Korrosionsschutzschicht 32 ist dann die erste, untere Gleitbeschichtung 20 aufgetragen und auf die erste, untere Gleitbeschichtung 20 dann die zweite, obere Gleitbeschichtung 22.

Mit Ausnahme der Korrosionsschutzschicht 32 kann die Schraube 30 der Fig. 3 infolgedessen gleich ausgebildet sein wie die Schraube 10 der Fig. 1.

Fig. 4 zeigt eine weitere erfindungsgemäße Schraube 40 gemäß einer dritten Ausführungsform der Erfindung. Der Schraubenschaft 12 und der Schraubenkopf 18 der Schraube 40 sind gleich ausgebildet wie bei der Schraube 10 der Fig. 1. Im Unterschied zur Schraube 10 der Fig. 1 ist im Bereich 24 und im Bereich der Schraubenspitze 14 aber die erste, untere Gleitbeschichtung 42 aufgetragen und die erste, untere Gleitbeschichtung 42 endet mit dem Ende des Bereichs 24. Zwischen dem Ende des Bereichs 24 und der Oberseite des Schraubenkopfs 18 ist dann als einzige Gleitbeschichtung nur noch die zweite, obere Gleitbeschichtung 44 vorgesehen. Die zweite, obere Gleitbeschichtung 44 ist bei der Schraube 14 als besonders temperaturstabile Gleitbeschichtung ausgebildet. Die erste, untere Gleitbeschichtung 42 ist hingegen auf einen geringen Reibwert zwischen der Schraube 40 und dem umgebenden Werkstoff des Werkstücks beim Einschrauben optimiert. Während des Einschraubens der Schraube 40 wird nach einigen Umdrehungen möglicherweise die zweite, obere Gleitbeschichtung 44 an der Spitze 14 und in dem Bereich 24, der sich an die Spitze 14 anschließt, vollständig abgetragen. Um dann ein weiteres Eindrehen der Schraube mit vergleichsweise geringem Eindrehmoment zu ermöglichen, ist im Bereich 24 und an der Spitze 14 noch die erste, untere Gleitbeschichtung 42 vorgesehen, die dann während des restlichen Eindrehens der Schraube bis zum vollständig eingeschraubten Zustand die Reibung zwischen dem Werkstück und der Schraube 40 an der Spitze 14 und im Bereich 24 deutlich gegenüber einer unbeschichteten Schraube verringert. Gerade während des kritischen Abschnitts des Eindrehens der Schraube 40, wenn kurz vor dem vollständig einschraubten Zustand das Einschraubmoment wesentlich ansteigt, da annähernd der vollständige Schraubenschaft vom Material des Werkstücks umgeben ist, kann dadurch mit der erfindungsgemäßen Schraube 40 das Einschraubmoment noch einmal reduziert werden, um zu vermeiden, dass das Einschraubmoment so hoch ansteigt, dass der Schraubenschaft 12 oder die Antriebsausbildung beschädigt wird.

Fig. 5 zeigt eine schematische Schnittansicht der erfindungsgemäßen Schraube 40, wobei die erste, untere Gleitbeschichtung 42 mit einer gestrichelten Linie und die zweite, obere Gleitbeschichtung 44 durch eine punktierte Linie aus schwarzen Quadraten symbolisiert ist.

Fig. 6 zeigt eine weitere erfindungsgemäße Schraube 50, die sich von der Schraube 40 der Fig. 4 und 5 lediglich durch eine Korrosionsschutzschicht 32, beispielsweise eine Verzinkung, auf dem Basismaterial des Schraubenschafts 12 von der Schraube 40 unterscheidet. Auf die Korrosionsschutzschicht 32 ist dann die erste, untere Gleitbeschichtung 42 aufgetragen und auf die erste, untere Gleitbeschichtung 42 an der Spitze 14 sowie im Bereich 24 und auch über den gesamten Schraubenschaft 12 und die Unterseite des Schraubenkopfs 18 die zweite, obere Gleitbeschichtung 44.

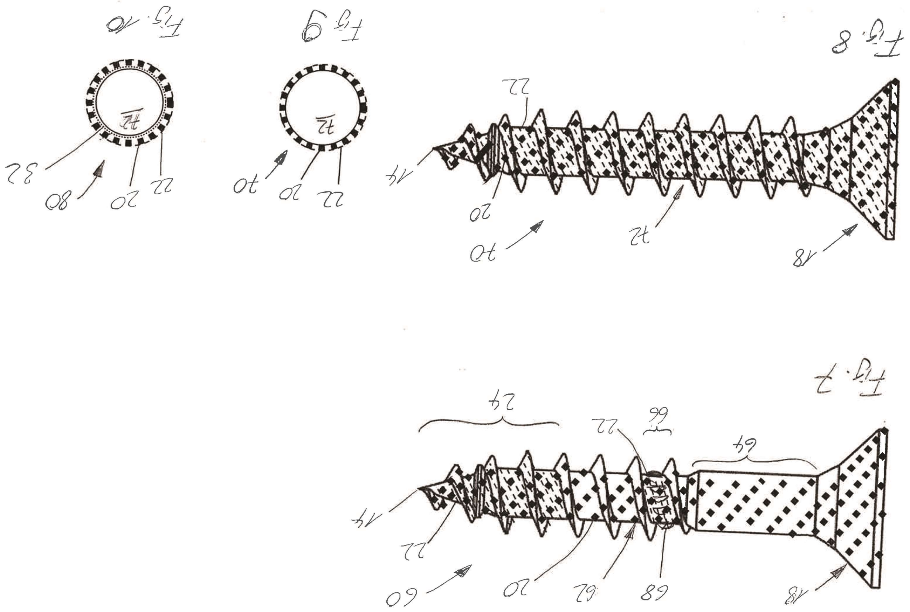

Fig. 7 zeigt eine Schraube 60 gemäß einer weiteren Ausführungsform der Erfindung. Die Schraube 60 weist einen Schraubenschaft 62 mit einer Spitze 14, einem sich ausgehend von der Spitze 14 kegelstumpfförmig erweiternden Bereich und einem sich an den kegelstumpfförmig erweiternden Bereich anschließenden zylindrischen Abschnitt des Schraubenschafts 62 auf. Der Schraubenschaft 62 weist darüber hinaus ein Gewinde auf, das sich jedoch lediglich über einen Teil der Länge des Schraubenschafts 62 erstreckt. Zwischen dem Ende des Gewindes und der Unterseite des Schraubenkopfs 18, der als Senkkopf ausgebildet ist, ist ein glatter Bereich 64 des Schraubenschafts mit erweitertem Durchmesser angeordnet.

Kurz vor dem Ende des Gewindes auf dem Schraubenschaft 62 ist ein Bereich 66 vorgesehen, in dem sich radial vom Kerndurchmesser des Schraubenschafts 62 nach außen erstreckende Schaftfräserrippen 68 vorgesehen sind. Die Schaftfräserrippen 68 sind dafür vorgesehen, einen Einschraubkanal, der durch die Schraube 60 gebildet ist, geringfügig zu erweitern und dadurch dafür zu sorgen, dass dann, wenn der glatte zylindrische Abschnitt 64 des Schraubenschafts 62 in den Einschraubkanal eintritt, das Einschraubmoment nicht übermäßig ansteigt.

Bei der Schraube 60 ist die Schraubenspitze 14 und der sich an die Schraubenspitze 14 anschließende Bereich 24 wie bei der Schraube 10 der Fig. 1 mit einer ersten, unteren Gleitbeschichtung 20 versehen, die in Fig. 1 wie in Fig. 7 durch punktierte Linien aus schwarzen Quadraten symbolisiert ist. Die erste, untere Gleitbeschichtung 20 ist über den vollständigen Schraubenschaft 62 sowie auch an der Unterseite des Schraubenkopfs 18 vorgesehen.

Die zweite, obere Gleitbeschichtung 22 ist lediglich an der Spitze 14 sowie in dem Bereich 24 vorgesehen, wie bei der Schraube 10 der Fig. 1. Darüber hinaus ist die zweite, obere Gleitbeschichtung 22, die wie in Fig. 1 auch in Fig. 7 durch gestrichelte Linien symbolisiert ist, auch im Bereich 66 vorgesehen, in dem die Schaftfräser 68 angeordnet sind. Auch der Bereich der Schaftfräser 68 ist bezüglich Abrieb und Temperatur beim Eindrehen der Schraube 60 in ein Werkstück besonders stark belastet. Auch im Bereich 66 sorgt das Vorliegen von zwei übereinander angeordneten Gleitbeschichtungen 20, 22 dafür, dass während des gesamten Einschraubvorgangs auch im Bereich 66 zumindest noch die erste, untere Gleitbeschichtung 20 vorhanden ist.

Fig. 8 zeigt eine weitere erfindungsgemäße Schraube 70 gemäß einer weiteren Ausführungsform. Im Unterschied zur Schraube 10 der Fig. 1 sind bei der Schraube 70 der Fig. 8 die erste untere Gleitbeschichtung 20, symbolisiert durch punktierte Linien aus schwarzen Quadraten, und die zweite, obere Gleitbeschichtung 22, symbolisiert durch strichlierte Linien, über die gesamte Schraube 70 aufgetragen. Der vollständige Schraubenschaft 72 einschließlich der Spitze 14 und die Unterseite des Schraubenkopfs 18 sind somit mit zwei übereinander angeordneten Gleitbeschichtungen versehen, nämlich mit der ersten, unteren Gleitbeschichtung 20 und der zweiten, oberen Gleitbeschichtung 22. Auch die in Fig. 8 nicht erkennbare Oberseite des Schraubenkopfs 18 kann mit den beiden Gleitbeschichtungen 20, 22 versehen sein, beispielsweise wenn die Schraube 70 in Tauchbädern oder durch Sprühvorgänge mit den beiden Gleitbeschichtungen 20, 22 versehen wird.

Fig. 9 zeigt eine schematische Schnittansicht der Schraube 70 mit der ersten, unteren Gleitbeschichtung 20, die unmittelbar auf das Basismaterial des Schraubenschafts 72 aufgetragen ist, und der zweiten, oberen Gleitbeschichtung 22, die auf die erste, untere Gleitbeschichtung 20 aufgetragen ist.

Fig. 10 zeigt eine schematische Schnittansicht einer Schraube 80 gemäß einer weiteren Ausführungsform der Erfindung. Die Schraube 80 unterscheidet sich von der Schraube 70 der Fig. 8 und 9 lediglich dadurch, dass auf das Basismaterial des Schraubenschafts 72 zunächst eine Korrosionsschutzschicht 32 aufgetragen wird, beispielsweise das Basismaterial des Schraubenschafts 72 verzinkt wird. Auf die Korrosionsschutzschicht 32 wird dann, wie anhand der Fig. 8 und 9 beschrieben wurde, zunächst die erste, untere Gleitbeschichtung 20 aufgetragen und auf die erste, untere Gleitbeschichtung 20 wird dann die zweite, obere Gleitbeschichtung 22 aufgetragen.

## Patentansprüche

1. Schraube zum Eindrehen in Holz oder holzähnliche Werkstoffe mit einem Schraubenschaft, wobei der Schraubenschaft eine sich verjüngende Spitze aufweist und wenigstens abschnittweise mit einem Gewinde versehen ist, und mit einem Schraubenkopf, wobei der Schraubenkopf mit einer Antriebsausbildung versehen ist, **dadurch gekennzeichnet, dass** wenigstens der Schraubenschaft wenigstens abschnittsweise mit einer ersten, unteren Gleitbeschichtung und einer zweiten, oberen Gleitbeschichtung versehen ist, wobei jede der Gleitbeschichtungen eine Reibung beim Eindrehen der Schraube zwischen der Schraube und dem Werkstück gegenüber dem Eindrehen einer Referenzschraube, bei der das Grundmaterial des Schraubenschafts nicht beschichtet ist, verringert, wobei das Grundmaterial des Schraubenschafts mit einer Korrosionsschutzschicht versehen ist und dass die beiden Gleitbeschichtungen auf die Korrosionsschutzschicht aufgetragen sind.

2. Schraube nach Anspruch 1, **dadurch gekennzeichnet, dass** die erste, untere Gleitbeschichtung oder die zweite, obere Gleitbeschichtung ausschließlich im Bereich der Spitze sowie maximal über 20mm anschließend an die Spitze aufgetragen ist.

3. Schraube nach Anspruch 1, **dadurch gekennzeichnet, dass** die erste, untere Gleitbeschichtung oder die zweite, obere Gleitbeschichtung ausschließlich im Bereich der Spitze sowie maximal über 20mm anschließend an die Spitze und im Bereich eines Schaftfräsers und /oder eines Schaftverdichters am Schraubenschaft aufgetragen ist.

4. Schraube nach wenigstens einem der vorstehenden Ansprüche, **dadurch gekennzeichnet, dass** die erste und/oder die zweite Gleitbeschichtung eine Dispersion von hochmolekularen Polymeren in einer Flüssigkeit, insbesondere Wasser, aufweist (Gleitmo615).

5. Schraube nach wenigstens einem der vorstehenden Ansprüche, **dadurch gekennzeichnet, dass** die erste, untere Gleitbeschichtung und/oder die zweite obere Gleitbeschichtung ein Kunststoffmaterial, insbesondere PTFE (Teflon), aufweist.

6. Schraube nach wenigstens einem der vorstehenden Ansprüche, **dadurch gekennzeichnet, dass** die erste, untere Gleitbeschichtung Zinklamellen aufweist.

7. Schraube nach wenigstens einem der vorstehenden Ansprüche, **dadurch gekennzeichnet, dass** ein Basismaterial des Schraubenschafts mit einer Korrosionsschutzschicht, insbesondere einer Zink-Nickel-Schicht, versehen ist.

8. Verfahren zum Beschichten einer Schraube **gekennzeichnet durch** Auftragen einer ersten, unteren Gleitbeschichtung und einer zweiten, oberen Gleitbeschichtung wenigstens auf den Schraubenschaft, weiter **gekennzeichnet durch** Aufbringen einer Korrosionsschutzschicht auf den gesamten Schraubenschaft vor dem Aufbringen der beiden Gleitbeschichtungen.

9. Verfahren nach Anspruch 8, wobei die erste, untere Gleitbeschichtung oder die zweite, obere Gleitschichtung ausschließlich im Bereich der Spitze des Schraubenschafts und in einem sich an die Spitze anschließenden Bereich des Schraubenschafts aufgetragen wird, wobei der sich an die Spitze anschließende Bereich maximal 20mm lang ist.

10. Verfahren nach einem der vorstehenden Ansprüche 8 bis 9, **gekennzeichnet durch** Aufbringen von Zinklamellen als erste, untere Gleitbeschichtung.

11. Anordnung mit einer Schraube nach wenigstens einem der vorstehenden Ansprüche 1 bis 7 und einem Werkstück aus Holz oder holzähnlichem Werkstoff, wobei die Schraube wenigstens abschnittsweise in das Werkstück eingeschraubt ist und wobei die zweite, obere Gleitbeschichtung wenigstens an der Spitze des Schraubenschafts abgetragen ist und die erste, untere Gleitbeschichtung wenigstens an der Spitze noch wenigstens teilweise vorhanden ist.

12. Anordnung nach Anspruch 11, wobei die zweite, obere Gleitbeschichtung in einem an die Spitze anschließenden Bereich, wobei der sich an die Spitze anschließende Bereich maximal 20mm lang ist, abgetragen ist und wobei die untere Gleitbeschichtung in dem an die Spitze anschließenden Bereich noch wenigstens teilweise vorhanden ist.
